# EUROPEAN PATENT SPECIFICATION

(11) **EP 1 992 077 B1**
(45) Date of publication and mention of the grant of the patent: **21.03.2018**
(21) Application number: 07716845.8
(22) Date of filing: 18.01.2007
(51) Int. Cl.: H02J 50/20, H02J 50/90

(54) **METHOD AND APPARATUS FOR DELIVERING ENERGY TO AN ELECTRICAL OR ELECTRONIC DEVICE VIA A WIRELESS LINK**
VERFAHREN UND VORRICHTUNG ZUR ENERGIEVERSORGUNG EINER ELEKTRISCHEN ODER ELEKTRONISCHEN VORRICHTUNG ÜBER EINE DRAHTLOSE VERBINDUNG
PROCÉDÉ ET SYSTÈME DE DISTRIBUTION D'ÉNERGIE À UN DISPOSITIF ÉLECTRIQUE OU ÉLECTRONIQUE PAR L'INTERMÉDIAIRE D'UNE LIAISON SANS-FIL

(30) Priority: 18.01.2006 US 760064 P; 21.04.2006 US 408793; 17.01.2007 US 654883
(43) Date of publication of application: 19.11.2008
(73) Proprietor: QUALCOMM Incorporated, San Diego, CA 92121 (US)
(72) Inventor: COOK, Nigel, P., El Cajon, CA 92019 (US); LEVINE, Richard, C., Dallas, TX 75248 (US)
(74) Representative: Wagner & Geyer
(86) International application number: PCT/US2007/001529
(87) International publication number: WO 2007/084717

(56) References cited:
- US-A1- 2005 194 926
- US-A1- 2005 220 057
- US-A1- 2005 220 057
- US-B2- 6 437 685
- US-B2- 6 437 685

## Description

### Priority and Related Applications

This application claims priority to co-owned and co-pending U.S. Utility Application Serial No. 11/ filed January 17, 2007 and entitled "Method And Apparatus For Delivering Energy To An Electrical Or Electronic Device Via A Wireless Link", which claims priority to U.S. Provisional Patent Application Serial No. 60/760,064 entitled "Method and System for Charging an Electronic Device via a Wireless Link" filed on January 18, 2006. This Application is also related to, and claims priority to, U.S. Patent Application Serial No. 11/408,793 entitled "Method and System for Powering an Electronic Device via a Wireless Link" filed on April 21, 2006, assigned to the Assignee hereof.

### 1. Field of the Invention

This invention relates generally to methods and apparatus for energy or power transfer, and in one aspect to wirelessly charging a portable power source, such as a battery, associated with an electronic device.

### 2. Description of Related Technology

Methods and systems for the wireless transmission of power are known in the prior art, for example, United States Patent No. 6,633,026 to Tuominen issued October 14, 2003 and entitled "Wireless power transmission" discloses a method for wireless power transmission in a system comprising a power transmitter which in turn comprises a first light source and means for directing the light emitted by the first light source to a desired direction, and at least one power
receiver comprising a first photo-detector for receiving the emitted light and for converting it into electric current. A second light source included in the power transmitter is used for transmitting light around the light emitted by the first light source and substantially parallel to it, the intensity of the light being lower than that of the light emitted by the first light source. A second photo-detector included in the power receiver is used for detecting the light emitted by the second light source and for transmitting a control signal to the power transmitter in response to a successful reception of the light emitted by the second light source. The first light source of the power transmitter is switched on in response to the reception of the control signal from the power receiver informing of the reception of the light emitted by the second light source.

United States Patent No. 6,664,770 to Bartels issued December 16, 2003 and entitled "Wireless power transmission system with increased output voltage" discloses a system for wireless power transmission, which makes it possible to generate an increased voltage on the receiver side using a radio signal that is optimized for this purpose and thereby permits operation particularly of digital semiconductor components in the receiver even if the receiver does not have a power supply of its own.

United States Patent No. 6,999,857 to Kasper, et al. issued February 14, 2006 and entitled "Data communication and power transmission system for sensing devices" discloses a wireless power transmission and communication network that provides interrogation and powering of sensors for use on undersea vehicles. The invention employs a wave-guide that allows the propagation of electromagnetic waves through a dielectric material that covers the exterior of an undersea vehicle's hull. Embedded within the dielectric material is an N dimensional array of Micro Electronic Mechanical Systems sensing devices coupled with radio frequency (RF) decoders and transceivers, and strips of conductive metal tape. Electromagnetic waves such as microwaves propagate through the dielectric material both powering the sensor network and addressing and interrogating individual sensing devices. The sensing devices take readings and then format and transmit the data results back across the wave-guide where they are received and processed by a digital processor within the hull of the undersea vehicle.

United States Patent No. 7,027,311 to Vanderelli, et al. issued April 11, 2006 and entitled "Method and apparatus for a wireless power supply" discloses an apparatus for a wireless power supply including a mechanism for receiving a range of RF radiation across a collection of frequencies. The apparatus includes a mechanism for converting the RF radiation across the collection of frequencies, preferably at a same time into DC. A method for a wireless power supply including the steps of receiving a range of RF radiation across a collection of frequencies. There is the step of converting the RF radiation across the collection of frequencies, preferably at a same time into DC.

United States Patent No. 7,068,991 to Parise issued June 27, 2006 and entitled "Remote power recharge for electronic equipment" discloses a conductorless charging and power system for electronic appliances and a method for communicating power to a power receiver employing wireless energy transmission. The remote charging system includes a power transmission unit, which transmits energy as a directional power beam, and a power receiver system that receives the transmitted energy. The power receiver system is preferably incorporated in an appliance and includes an energy receptor capable of receiving the wireless power beam and transferring the energy from the beam to an energy storage device included in the appliance. The power transmission unit receives and tracks a power request signal from the power receiver system to track the power receiver system location during energy transmission. Data streams may be incorporated into the wireless signals of the remote charging system, allowing the remote charging system to function as a communications pathway as well as a power delivery system.

United States Patent Publication No. 20060097667 to Kang, et al. published on May 11, 2006 and entitled "Wireless power supply and method of supplying power" discloses a wireless power supply and method of wirelessly supplying power using light to directly supply power wirelessly to an electrical apparatus without a power cable. The wireless power supply includes: a plurality of pressure switches adapted to switch ON/OFF in response to an applied pressure; and a plurality of light emitting devices respectively connected to the plurality of pressure switches, the plurality of light emitting devices adapted to emit light to supply the power to a load in response to at least one of the pressure switches being switched ON.

United States Patent Publication No. 20060205381 to Beart, et al. published on September 14, 2006 and entitled "Adapting portable electrical devices to receive power wirelessly" discloses a wireless power receiving apparatus that is retrofitted to a portable electrical device to enable the device to receive power wirelessly. The apparatus comprises a power-receiving element adapted to be attached to the device, e.g. by adhesive, and also being adapted to receive power wirelessly from a transmitter of power when the element and transmitter are in proximity with one another. One or more power connectors are connected electrically to the power-receiving element and are adapted to be connected, when the apparatus is in use, to one or more corresponding power connectors of the portable electrical device to deliver power received by the element to the device. The power-receiving element may be in the form of a sticker or may be carried by or incorporated in a replacement cover portion for the portable electrical device.

United States Patent Publication No. 20060238365 to Vecchione, et al. published on October 26, 2006 and entitled "Short-range wireless power transmission and reception" discloses a short-range wireless power transmission and reception system and methods. Power is transmitted from the electrical utility mains power supply to electrically powered appliances via electromagnetic radiation The appliances are capable of receiving the transmitted power, converting it into electricity and storing it for subsequent use, as well as using it directly to power the appliances.

United States Patent Publication No. 20060266917 to Baldis, et al. published on November 30, 2006 and entitled "Wireless Power Transmission System" discloses a method for wireless power transmission that comprises a transmitter and a receiver. The receiver does not require an independent power source and is comprised of an optical feedback to the transmitter, and therefore does not require a separate communication channel to the transmitter. The transmitter uses the optical feedback to locate and track the receiver. The transmitter can optionally employ a macro adjusters and micro adjusters that direct the beam onto the receiver for optimal power transmission. The system also optionally has a tight loop beam detector to enhance safety of the system. Either the receiver and/or the transmitter may also encode data on the energy transmission, resulting in one-way or two-way data transmission.

United States Patent Publication No. 20070010295 to Greene, et al. published on January 11, 2007 and entitled "Power transmission system, apparatus and method with communication" discloses a power transmission system with communication having a base station having a wireless power transmitter, a wireless data transmission component and a first wireless data reception component. The system includes a remote station having a power harvester for converting the power from the power transmitter into direct current and a power storage component in communication with the power harvester for storing the direct current. Alternatively, the system includes a base station having a wireless power transmitter which transmits power at a frequency at which any sidebands are at or below a desired level, and a first wireless data communication component.

Recent developments in technology enable electronic devices, such as without limitation laptop or notebook computers, cell phones and PDAs (personal digital assistant) to run various multimedia or other processing-intensive applications. However, despite the foregoing wireless power transmission systems, these new multimedia applications often require a large amount of power to run, and are unable to be charged via a wireless link. In addition to the convenience associated with a wireless power transmission system, there is also a significant benefit in convenience and safety when any of such devices, for example a cell phone, is kept adequately charged without the need to connect to a powered wire. Therefore it is desired to provide an apparatus and/or system for the powering of certain electronic devices via a wireless link.

Moreover, delivery of power to electrical and electrical devices (e.g., appliances, lighting, etc.) also would allow a great degree of flexibility in terms of use and placement; e.g., a "wireless" lamp could be placed anywhere in a room without concern for tripping over wires, aesthetics, etc.
Attention is drawn to document -US 6437685 B2, which describes a cordless power transmission system that can transmit and receive power stably. A power transmission terminal transmits default power to an electrical appliance by diffractive electromagnetic waves. The electrical appliance transmits its own unique data and required power intensity data to the power transmission terminal by diffractive electromagnetic waves. A network host assigns an ID to the electrical appliance. Under the control of the network host, the power transmission terminal transmits the assigned ID data and the power with the required intensity to the electrical appliance by rectilinear electromagnetic waves.

### Summary of the Invention

In accordance with the present invention an apparatus and method for providing power to a device, as set forth in claims 1 and 5, is provided. Embodiments of the invention are defined in the appended claims.

In a first aspect of the invention, apparatus for providing power to a device via a wireless link is disclosed. In one embodiment, the apparatus comprises: a transmitting antenna operative to provide power to the device via the wireless link; a sensing antenna operative to sense signals transmitted by the device; and a control unit assembly operative to control the operation of the transmitting antenna. In one variant, at least a portion of the apparatus is mounted substantially within a ceiling-mounted dome. In another variant, the power transmitted is unmodulated.

In another variant, the control unit assembly is operative to control the movement of the transmitting antenna in at least two degrees of freedom. The at least two degrees of freedom comprise a substantially azimuthal degree of freedom and a substantially elevational degree of freedom.

In another variant, the control unit is operative to charge a plurality of devices via a wireless link according to a time-division multiple access (TDMA) scheme. In a second aspect of the invention, a method for providing power to a device via a wireless link is disclosed. In one embodiment, the method comprises: detecting a first direction for the device using a sensing antenna; directing a transmission antenna so that it can transmit at least some power in the first direction based at least in part on the act of detecting; and transmitting power from the transmission antenna via the wireless link to the device. In a third aspect ouside of the invention, a method for providing power to a plurality of devices via a wireless link is disclosed. In one embodiment, the power is transmitted from a transmitting antenna, and the method comprises: disposing the transmitting antenna so that power can be transmitted to the plurality of devices substantially simultaneously; and transmitting power from the transmission antenna via the wireless link to the plurality of devices according to a multiple access scheme.

In one variant, the multiple access scheme comprises a substantially time-divided scheme. In another variant, the multiple access scheme comprises a substantially frequency-divided scheme. In yet another variant, the multiple access scheme comprises a substantially frequency-hopped scheme. In still another variant, the multiple access scheme comprises a substantially code-divided scheme. As yet another alternative, the multiple access scheme comprises a sensing scheme wherein a channel is sampled before access is granted.

In a fourth aspect of the invention, apparatus for providing power to a plurality of devices via a wireless link is disclosed. In one embodiment, the apparatus comprises: a transmitting antenna configured to radiate power, the antenna further comprising apparatus allowing the antenna to selectively transmit power to the plurality of devices; a power source capable of generating the power for transmission; and a controller in signal communication with at least one of the antenna and source, the controller being adapted to cause the antenna to transmit the power to the plurality of devices according to a multiple access scheme.

In one variant, the antenna is substantially directional, and the multiple access scheme comprises a substantially time-divided scheme.

In a fifth aspect of the invention, apparatus for receiving power via a wireless link is disclosed. In one embodiment, the power is useful for providing electrical power to one or more components of the apparatus, and the apparatus comprises: a receiving antenna configured to receive power from a transmitting antenna; power source apparatus capable of storing at least a portion of the received power for subsequent use; and a controller in signal communication with at least one of the antenna and source apparatus, the controller being adapted to facilitate selective receipt of the power via the antenna. In one variant, the selective receipt comprises selective receipt according to a multiple access scheme, wherein devices other than the apparatus also receive power substantially simultaneously with the apparatus receiving power.

### Brief Description of the Drawings

The features, objectives, and advantages of the invention will become more apparent from the detailed description set forth below when taken in conjunction with the drawings, wherein:
FIG. 1 illustrates at least one exemplary embodiment of a system for charging an electronic device via a wireless link.
FIG. 2 is a logical flow diagram that illustrates a first exemplary method of directing power from a transmission antenna.
FIG. 3 is a logical flow diagram that illustrates a first exemplary method of prioritizing time sharing between a plurality of mobile devices.

All Figures disclosed herein are © Copyright 2006-2007 Third Option, L.L.C. All rights reserved.

### Detailed Description of the Preferred Embodiment

Reference is now made to the drawings wherein like numerals refer to like parts throughout.

As used herein, the terms "mobile device" or "client device" include, but are not limited to, personal digital assistants (PDAs), handheld computers, personal communicators, J2ME equipped devices, cellular telephones, smartphones, "SIP" phones, personal computers (PCs) and minicomputers, whether desktop, laptop, or otherwise, or literally any other device capable of utilizing electrical or electromagnetic power.

As used herein, the term "application" refers generally to a unit of executable software that implements a certain functionality or theme. The themes of applications vary broadly across any number of disciplines and functions (such as communications, instant messaging, content management, e-commerce transactions, brokerage transactions, home entertainment, calculator etc.), and one application may have more than one theme. The unit of executable software generally runs in a predetermined environment; for example, the unit could comprise a downloadable Java Xlet™ that runs within the Java™ environment.

As used herein, the terms "microprocessor" and "digital processor" are meant generally to include all types of digital processing devices including, without limitation, digital signal processors (DSPs), reduced instruction set computers (RISC), general-purpose (CISC) processors, microprocessors, gate arrays (e.g., FPGAs), PLDs, reconfigurable compute fabrics (RCFs), array processors, and application-specific integrated circuits (ASICs). Such digital processors may be contained on a single unitary IC die, or distributed across multiple components.

As used herein, the term "integrated circuit (IC)" refers to any type of device having any level of integration (including without limitation ULSI, VLSI, and LSI) and irrespective of process or base materials (including, without limitation Si, SiGe, CMOS and GaAs). ICs may include, for example, memory devices (e.g., DRAM, SRAM, DDRAM, EEPROM/Flash, ROM), digital processors, SoC devices, FPGAs, ASICs, ADCs, DACs, transceivers, memory controllers, and other devices, as well as any combinations thereof.

As used herein, the term "memory" includes any type of integrated circuit or other storage device adapted for storing digital data including, without limitation, ROM. PROM, EEPROM, DRAM, SDRAM, DDR/2 SDRAM, EDO/FPMS, RLDRAM, SRAM, "flash" memory (e.g., NAND/NOR), and PSRAM.

As used herein, the term "cellular" includes any form of cell-based mobile communications system including cellular telephones, "walkie-talkie" devices (such as those marketed by Nextel and Motorola Corporations, and so-called PTx ("push-to-anything") devices such as the exemplary PTT (push-to-talk over cellular) devices which establish and tear down SIP or other communications sessions as part of their protocol.

It will be appreciated that while the exemplary embodiments of the invention are described primarily in the context of mobile or client electronic devices, the various aspects of the present invention are in no way so limited, and in fact may be applied to other (e.g., non-mobile and/or non-electronic) devices, whether they include an electrical storage device or otherwise, including without limitation appliances, substantially fixed computer systems, televisions, lighting, and so forth.

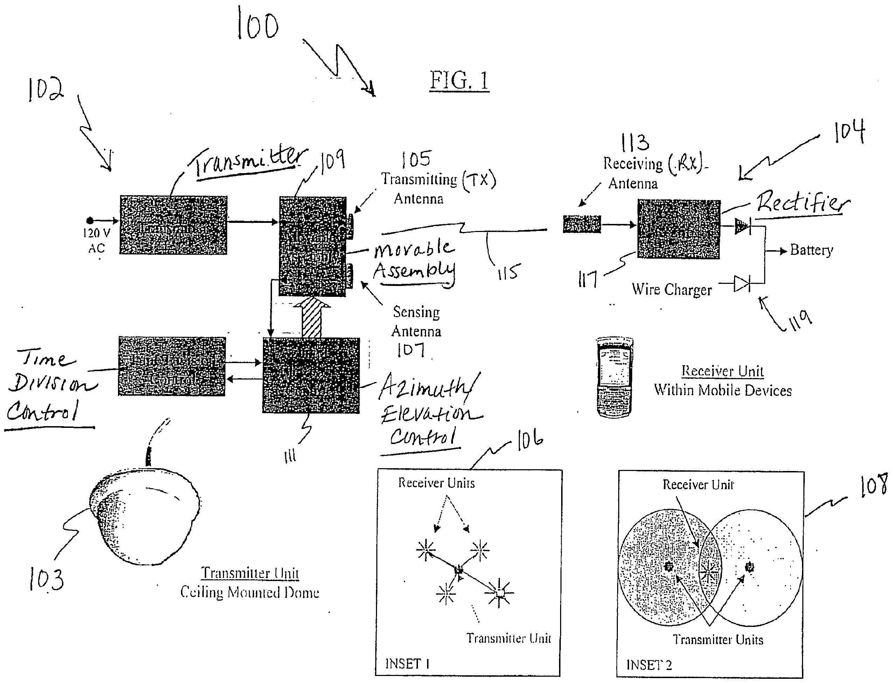

Referring now to Fig. 1, one exemplary embodiment of a power transfer system according to the invention is described. In one embodiment, the transmitter 102 of the system may reside within, e.g., a ceiling mounted dome 103 or other such fixture, although mobile applications (e.g., in a car, truck, aircraft, etc.) are also contemplated. The receiver 104 may reside within a device that is capable of using electrical or electromagnetic power and/or wireless charging. The device may comprise, without limitation, at least one of a mobile or cellular telephone, personal data assistant (PDA), portable computer (e.g., a notebook PC), media player, a clock, an electronic display, or any other device that utilizes electric or electromagnetic power; e.g., from a portable source, such as a rechargeable battery.

Mobile devices that are turned on are considered to be active. In the example of a mobile telephone, the mobile telephone is active because it continuously or periodically communicates with its service-provider's local cell tower by, for example, exchanging a handshaking signal. It is this handshaking signal that enables the charging system's transmitter 102 to locate an exact or approximate position of the mobile device and target a concentrated charging beam at its receiver 104 to charge its battery.

In one embodiment, as shown in Inset 1 (106) of Figure 1, multiple mobile devices within the coverage of a single transmitter 102 may be charged concurrently. In another embodiment, as shown in Inset2 (108) of Figure 1, a single mobile device having a built-in receiver 104 may be located within the coverage of and be charged by multiple transmitters 102.

As noted above, the transmitter 102 of the exemplary embodiment is located within, for example, a ceiling dome 103 and powered by, for example, a standard 120 volts AC supply. The transmitter 102 generates signals that carry the charging energy. Signals of various waveforms including, for example, a continuous-wave (CW) single-frequency signal, a sinusoidal wave signal (no harmonics) may be used to carry and deliver the electric power to the receiver 104. In another embodiment, multiple frequency signals may be used. Also, the signal may be of any frequency and power level suitable for carrying and delivering power sufficient to charge a battery of a mobile device within a range of about 0 - 40 feet, and preferably within a range of 0 - 20 feet. One example of the signal may be a single frequency selected in the microwave band. In one embodiment, the signal may be selected with a frequency between 1 GHz - 40 GHz, and preferably between 12 GHz - 36 GHz. It is desirable to select the transmitter 102 to generate signals of sufficient power to charge the mobile devices wirelessly, while at the same time avoiding undesired results, such as interference with other wireless systems in the vicinity of the transmitter 102. In one embodiment, the transmitter 102 is selected to generate signals at a power level of about 1 to 50 watts. For example, the power of the transmitter 102 may be selected to communicate to a transmitting antenna 105 a signal at a power level of about 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or 50 Watts. In another embodiment, signals of lower or higher power may also be used to achieve the delivery of power.

The signal from the transmitter 102 may be fed to the transmitting (TX) antenna 105, which may be omni-directional or directional. In one embodiment, it is desirable to select the TX antenna 105 as a directional antenna, e.g., with a beam-width angle between 0.1 - 20 degrees. For example, the beam-width angle may be selected at about 0.1, 0.2, 0.25, 0.5, 0.75, 1, 2, 3, 4, 5, 6, 7, 8, 9, 10, 11, 12, 13, 14, 15, 16, 17, 18, 19, or 20 degrees. In one embodiment, the TX antenna 105 is configured to emit a signal of about 1 degree in beam width angle, suitable for transmitting signals of frequencies within the 12 GHz to 36 GHz band. The power gain of the TX antenna 105 may be about 5, 6, 7, 8, 9, 10, 11, 12, 13, 14, 15 or 16 decibels (dB). When using a 12 decibel power gain, the TX antenna 105 may amplify the transmit signal by about 16 times.

In one embodiment, the transmitter 102 also comprises a sensing antenna 107, which is selected to be substantially equally directional as the TX antenna 105. In one embodiment, the sensing antenna 107 is configured to be suitable for sensing signals already transmitted by a mobile device, e.g., signals of frequencies within the 800 to 1900 MHz band. It is however recognized that the sensing antenna 107 may be sensitive to receive and detect a signal in any desired frequency band. The TX antenna 105 and the sensing antenna 107 will, in one embodiment, advantageously point in substantially the same direction and be mounted on a movable assembly 109 that is configured to be adjustable in azimuth (bearing) and elevation (altitude). By pointing in substantially the same direction, the TX antenna 105 can be directed in a direction of a receiver 104 sensed by the sensing antenna 107 thereby emitting the wireless power signal in a way that optimizes power transfer efficiency between the TX antenna 105 and the RX antenna 113.

In another embodiment, the TX antenna 105 and the sensing antenna 107 can be mounted so as to operate in independent directions. The advantage of such an embodiment is that the TX antenna 105 can, for example, operate independently of the sensing antenna 107. For example, the sensing antenna 107 can advantageously operate in a scanning mode which constantly attempts to reacquire an optimized direction in which the signal emitted by the receiver 104 is maximized thereby providing updated information of e.g. the location of the receiver 104 to a control unit 111. The control unit includes in one exemplary embodiment integrated circuit components (e.g., digital processor, memory, microcontroller, etc.) used to effect control of the apparatus, e.g., according to the principles and methods described herein, such as via control logic or a computer program of the type well known in the art. The TX antenna 105 can therefore maintain a fixed position on the desired direction, while the sensing antenna 107 scans the field, until the control unit 111 informs the TX antenna 105 that the desired transmission direction has changed (e.g. due to movement of the receiver 104, etc.). In this way, the transmission direction of the TX antenna 105 can remain static while the sensing antenna 107 continues to optimize transmission direction.

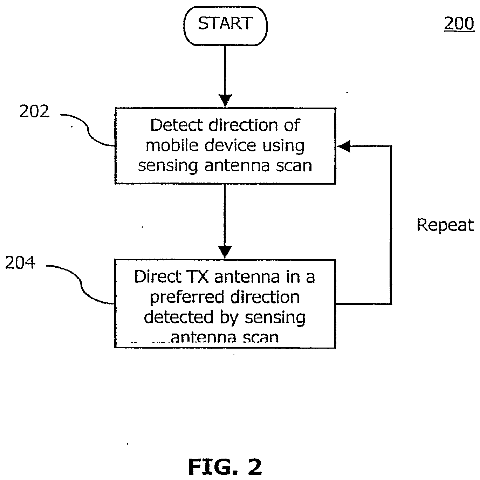

As previously alluded to, an azimuth/elevation control unit 111 is configured to move the assembly 109 through a search pattern, such as e.g., via the exemplary method 200 illustrated in FIG. 2. Upon detecting an active mobile device by the sensing antenna 107 (e.g., by receiving signals in the 800 - 1900 MHz range), the movable assembly's 109 position may be fine tuned until the sensing antenna 107 receives signals of maximum or close to a maximum received power from the mobile device in step 202. One goal that is achieved with this targeting procedure is to accurately align the TX antenna 105 to ensure that it is pointing directly at the mobile device (e.g., its receiving (RX) antenna 113), thereby achieving maximum transmit-to-receive power capture in step 204. In one embodiment, the procedure 200 may then be optionally repeated after a preset timer value has expired. In another embodiment, the procedure 200 may optionally be repeated once the received power from the mobile device detected in step 202 decreases beyond a predetermined threshold value. In yet another embodiment, the procedure 200 may optionally be repeated continuously so as to continuously reassess the proper direction for the TX antenna 105.

In one embodiment, the azimuth/elevation control unit 111 may be selected to operate in a manner similar to an infrared tracking security camera, except that the control unit 111 is configured to move the assembly 109 in response to a monitored signal (e.g., handshaking signal) received by the sensing antenna 107 instead of an infrared signal. More particularly, the control unit 111 may be configured to scan for a radio frequency signal within a desired range of frequencies (and power levels) to identify a target device for activating a charging of power via a wireless link 115. The TX antenna 105 and sensing antenna 107 can then move in tandem or move in an independent manner as described previously.

In certain embodiments, the transmitter 102 may also comprise a control unit 111 for charging multiple receivers 104 concurrently. In one embodiment, the transmitter 102 comprises a multiple access scheme (e.g., time division multiple access (TDMA)) control unit 111. The TDMA control unit 111 determines how many active mobile devices lock with the transmitter 102, and coordinates time sharing the power charging among all of the locked mobile devices. It will be appreciated, however, that other multiple access/power transfer schemes may be used consistent with the invention. For example, in one variant, a frequency-divided (e.g., FDMA) system is used, wherein different devices are provided power using different frequencies (which may be narrowband or broadband in nature). Similarly, a frequency-hopped approach can be used, wherein each device to be powered is assigned a hopping code for access to power transmitted over a plurality of frequencies.

In another variant, an approach analogous to "carrier" sense (e.g., CSMA) can be used to effectively "grab" the power delivery channel when not in use by other device, recognizing, however, that in the strict sense, there is no "carrier" *per se* (unless a modulation is optionally applied). In still another variant, a code-divided approach (e.g., CDMA) can be used, so that power is transmitted across a range of frequencies to multiple devices, each of the devices being configured to receive the power transmitted according to their particular spreading code. This selective reception can be accomplished by, e.g., using selective filtering, a receiver which is only sensitive to certain frequencies, or any other techniques well known in the digital communication and multiple access fields. It will be appreciated, however, that unlike the digital communications arts, the apparatus of the present invention can be utilized without modulation if desired; i.e., no data or other modulations need be encoded onto the transferred power unless desired.

Moreover, combinations of the foregoing can be used. For example, in one such possible combination, the time-divided and frequency-divided approaches are combined, such

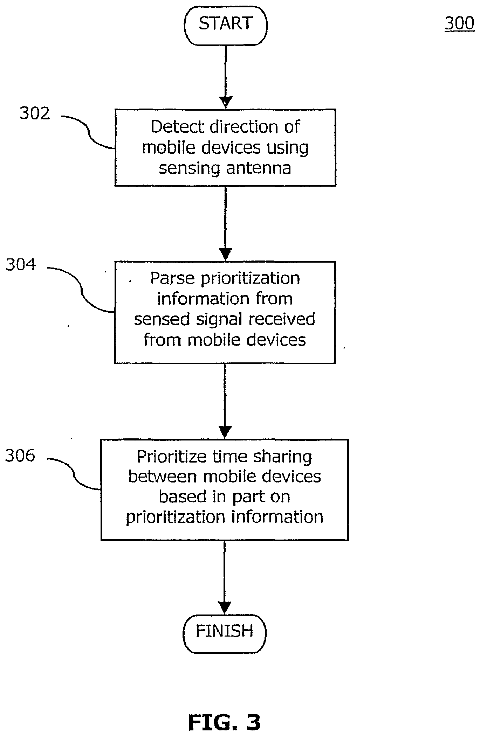

Referring now to FIG. 3, information may be detected by the sensing antenna 107 that provides information useful in prioritizing time sharing among all of the locked mobile devices using a predetermined algorithm 300. In step 302, the sensing antenna 107 may detect the direction of each of the mobile devices based on e.g. the power level of the respective signals transmitted by the mobile devices. In step 304, the control unit 111 will parse prioritization information from the signals received from each of the plurality of mobile devices. For example, the sensing antenna 107 may, in one embodiment outside of the invention, receive information indicative a charge level for each of the locked mobile devices. The control unit 111 may then prioritize time sharing amongst the locked mobile devices with the lowest relative charge level in step 306. In another embodiment outside of the invention, the sensing antenna 107 may receive information which is indicative of rate of current power consumption by each of the locked mobile devices. Hence, the control unit 111 may then prioritize time sharing amongst the locked mobile devices so that those mobile devices currently consuming the largest amount of relative power are prioritized first in the time sharing scheme. Any number of other schemes may be utilized individually or in conjunction with one another, based on available information so as to provide an efficient time sharing scheme.

The receiver 104 is configured to receive the signal from the transmitter 102 and supply the same to charge the mobile device. In certain-embodiments, the receiver 104 is built into mobile devices. The receiver 104 comprises a wireless charging receiving antenna 113 which may or may not be the same antenna that mobile devices use to communicate with the cell tower. The wireless charging receiving antenna 113 gathers as much of the beamed radio frequency energy from the transmitter 102 and delivers it to a rectifier 117. The rectifier 117 may be a Germanium-based rectifier characterized by a low barrier or threshold voltage (i.e., low on-power rectifier), to allow activation of the rectifier 117 in the event of receiving a low level signal. The rectifier 117 may also be characterized as a passive RF power sensor to minimize the use of power by the rectifier 117 from the mobile device. In one embodiment, the receiver 104 also comprises a plurality of diodes 119 (e.g., two diodes) which allow the mobile device's battery to be charged by either the wireless charging link 115 or a wired charging path.

The rectifier 117 is configured to convert the AC electrical energy from the antenna to a voltage signal, e.g., a DC voltage signal, suitable for charging the mobile device's battery. In one embodiment, a voltage regulator may be integrated with or in addition to the rectifier to regulate or limit the power supplied to the mobile device at a desired level. The voltage regulator may operate particularly when the physical movement of the mobile device causes the power of the signal received by the RX antenna 113 to vary. This variation may be due to variation in the path of the signal transmitted by the transmitter 102.

The exemplary wireless charging system 100 is configured such that sufficient energy is transmitted and delivered at the receiving antenna 113 for charging. As an illustration, a typical cell phone charger may have a maximum rating of about 4.9 volts and 450 milliamperes (mA). The power rating therefore is about 2.2 watts maximum with 1 watts optimum. For this illustration, the transmitter 102 may provide an effective charging area of, for example, 1000 square feet. In one embodiment, the transmitter 102 sends out signals of 25 watts power. The transmitting antenna 105 may be designed to be of a 12 decibel power gain amplifies the signal to be of 400 watts power (i.e., equivalent to 16 x 25 watts). Considering that a signal may be subject to a maximum of 20 dB loss over a 20 feet transmission path, a mobile device located 20 feet from the transmitting 102 may receive signals of at least 4 watts, sufficient to charge a typical mobile device. Therefore, this embodiment provides a coverage area of more than 1000 square feet.

## Claims

1. An apparatus for providing power to a device (104), comprising:
a transmitting antenna (105) operative to provide power to said device via a wireless link (115);
a sensing antenna (107) operative to sense at least one power level of signals transmitted by said device (104) and operative to determine in a scanning mode an optimized direction in which the signals transmitted by the device (104) are received at a maximum or close to a maximum; and
a control unit assembly (111) operative to control said transmitting antenna (105), said control unit assembly (111) configured to control a direction of transmission of said transmitting antenna (105) based on said optimized direction, both said transmitting antenna (105) and said sensing antenna (107) coupled to said control unit.

2. The apparatus of Claim 1, wherein said apparatus is mounted substantially within a ceiling-mounted dome (103).

3. The apparatus of Claim 1, wherein said control unit assembly (111) is operative to control a movement of said transmitting antenna (105) in at least two degrees of freedom, wherein said at least two degrees of freedom comprise a substantially azimuthal degree of freedom and a substantially elevational degree of freedom.

4. The apparatus of Claim 1, wherein said control unit is operative to charge a plurality of devices via said wireless link according to a time-division multiple access (TDMA) scheme.

5. A method (200) of providing power to a device (104), comprising:
detecting (202) a first direction for said device based on at least one power level of signals transmitted from said device (104) using a sensing antenna (107), wherein said first direction is an optimized direction determined in a scanning mode and wherein the signals transmitted by the device (104) are received at the sensing antenna at a maximum or close to a maximum in said optimized direction;
directing (204) a transmission antenna so that it can transmit more of its power in said first direction based at least in part on said optimized direction; and
transmitting substantially unmodulated power from said transmission antenna via said wireless link (115) to said device (103).

6. The method of claim 5, wherein said method is carried out in an apparatus mounted substantially within a ceiling-mounted dome (103).

7. The method of claim 5, further comprising controlling a movement of said transmitting antenna (105) in at least two degrees of freedom, wherein said at least two degrees of freedom comprise a substantially azimuthal degree of freedom and a substantially elevational degree of freedom.

8. The method of claim 5, wherein said method is for charging a plurality of devices via said wireless link (115) according to a time-division multiple access (TDMA) scheme.

## Patentansprüche

1. Eine Vorrichtung zum Liefern von Leistung an eine Einrichtung (104), das Folgendes aufweist:
eine sendende Antenne (105), die betreibbar ist zum Liefern von Leistung an die Einrichtung über eine Drahtlosverbindung (115);
eine abfühlende Antenne (107), die betreibbar ist zum Abfühlen wenigstens eines Leistungspegels von Signalen, die durch die Einrichtung (104) gesendet werden und betreibbar ist zum Bestimmen, in einem Scan- bzw. Suchmodus, einer optimierten Richtung, in der die Signale, die durch die Einrichtung (104) gesendet werden, mit einem Maximum oder in der Nähe eines Maximum empfangen werden; und
eine Steuereinheitenanordnung (111), die betreibbar ist zum Steuern der sendenden Antenne (105), wobei die Steuereinheitenanordnung (111) konfiguriert ist zum Steuern einer Richtung einer Sendung der sendenden Antenne (105) basierend auf der optimierten Richtung, wobei sowohl die sendende Antenne (105) als auch die abfühlende Antenne (107) an die Steuereinheit gekoppelt sind.

2. Vorrichtung nach Anspruch 1, wobei die Vorrichtung im Wesentlichen innerhalb einer an der Decke befestigten Kuppel (103) angeordnet ist.

3. Vorrichtung nach Anspruch 1, wobei die Steuereinheitenanordnung (111) betreibbar ist zum Steuern einer Bewegung der sendenden Antenne (105) in wenigstens zwei Freiheitsgraden, wobei die wenigstens zwei Freiheitsgrade einen im Wesentlichen azimutalen Freiheitsgrad aufweisen und einem im Wesentlichen neigungsbezogenen Freiheitsgrad aufweisen.

4. Vorrichtung nach Anspruch 1, wobei die Steuereinheit betreibbar ist zum Laden einer Vielzahl von Einrichtungen über die Drahtlosverbindung gemäß einem Zeitmultiplex-Vielfachzugriffs- bzw. TDMA-Schema (TDMA = time-division multiple access).

5. Ein Verfahren (200) zum Vorsehen von Leistung an eine Einrichtung (104), das Folgendes aufweist:
Detektieren (202) einer ersten Richtung für die Einrichtung basierend auf wenigstens einem Leistungspegel von Signalen, die von der Einrichtung (104) gesendet werden, unter Verwendung einer abfühlenden Antenne (107), wobei die erste Richtung eine optimierte Richtung ist, die in einem Scan- bzw. Suchmodus bestimmt wird und wobei die Signale, die durch die Einrichtung (104) gesendet werden, an der abfühlenden Antenne auf einem Maximum oder in der Nähe eines Maximums in der optimierten Richtung empfangen werden;
Ausrichten (204) einer Sendeantenne, so dass sie mehr von ihrer Leistung in der ersten Richtung senden kann basierend wenigstens teilweise auf der optimierten Richtung; und
Senden von im Wesentlichen unmodulierter Leistung von der Sendeantenne über die Drahtlosverbindung (115) an die Einrichtung (103).

6. Verfahren nach Anspruch 5, wobei das Verfahren in einer Vorrichtung ausgeführt wird, die im Wesentlichen innerhalb einer an einer Decke angebrachten Kuppel (103) angebracht ist.

7. Verfahren nach Anspruch 5, das weiter Steuern einer Bewegung der sendenden Antenne (105) in wenigstens zwei Freiheitsgraden aufweist, wobei die wenigstens zwei Freiheitsgrade einen im Wesentlichen azimutalen Freiheitsgrad und einen im Wesentlichen neigungsbezogenen Freiheitsgrad aufweisen.

8. Verfahren nach Anspruch 5, wobei das Verfahren vorgesehen ist zum Laden einer Vielzahl von Einrichtungen über die Drahtlosverbindung (115) gemäß einem Zeitmultiplex-Vielfachzugriffs- bzw. TDMA-Schema (TDMA = time-division multiple access).

## Revendications

1. Appareil pour fournir de l'énergie à un dispositif (104), comprenant :
une antenne d'émission (105) actionnable pour fournir de l'énergie au dispositif par l'intermédiaire d'une liaison sans fil (115) ;
une antenne de détection (107) actionnable pour détecter au moins un niveau de puissance de signaux émis par le dispositif (104) et actionnable pour déterminer dans un mode d'analyse une direction optimisée dans laquelle les signaux émis par le dispositif (104) sont reçus à un maximum ou à proximité d'un maximum ; et
un ensemble formant module de commande (111) actionnable pour contrôler l'antenne d'émission (105), l'ensemble formant module de commande (111) étant agencé pour contrôler une direction d'émission de l'antenne d'émission (105) sur la base de la direction optimisée, l'antenne d'émission (105) et l'antenne de détection (107) étant toutes les deux couplées au module de commande.

2. Dispositif selon la revendication 1, dans lequel le dispositif est monté sensiblement dans un dôme monté au plafond (103).

3. Dispositif selon la revendication 1, dans lequel l'ensemble formant module de commande (111) est actionnable pour contrôler un mouvement de l'antenne d'émission (105) dans au moins deux degrés de liberté, lesdits au moins degrés de liberté comprenant un degré de liberté sensiblement à l'azimut et un degré de liberté sensiblement en élévation.

4. Dispositif selon la revendication 1, dans lequel le module de commande est actionnable pour charger une pluralité de dispositifs par l'intermédiaire de la liaison sans fil selon un processus d'accès multiple par séparation temporelle (TDMA).

5. Procédé (200) pour fournir de l'énergie à un dispositif (104), comprenant :
détecter (202) une première direction pour le dispositif sur la base d'au moins un niveau de puissance de signaux émis à partir du dispositif (104) en utilisant une antenne de détection (107), la première direction étant une direction optimisée déterminée dans un mode d'analyse et les signaux émis par le dispositif (104) étant reçus au niveau de l'antenne de détection à un maximum ou à proximité d'un maximum dans la direction optimisée ;
diriger (204) une antenne d'émission de telle sorte qu'elle puisse émettre la plus grande partie de son énergie dans la première direction sur la base au moins en partie de la direction optimisée ; et
émettre de l'énergie sensiblement non modulée à partir de l'antenne d'émission par l'intermédiaire de la liaison sans fil (115) vers le dispositif (103).

6. Procédé selon la revendication 5, dans lequel le procédé est réalisé dans un dispositif monté sensiblement dans un dôme monté au plafond (103).

7. Procédé selon la revendication 5, comprenant en outre le contrôle d'un mouvement de l'antenne d'émission (105) dans au moins deux degrés de liberté, lesdits au moins deux degrés de liberté comprenant un degré de liberté sensiblement à l'azimut et un degré de liberté sensiblement en élévation.

8. Procédé selon la revendication 5, dans lequel le procédé est destiné à charger une pluralité de dispositifs par l'intermédiaire de la liaison sans fil (115) selon un processus d'accès multiple par séparation temporelle (TDMA).
